# EUROPEAN PATENT SPECIFICATION

(11) **EP 0 291 035 B1**
(45) Date of publication and mention of the grant of the patent: **26.04.1995**
(21) Application number: 88107558.4
(22) Date of filing: 11.05.1988
(51) Int. Cl.: G02B 26/10, G02B 27/00

(54) **A light beam deflection scanning apparatus**
Vorrichtung zum Abtasten mit Lichtstrahlen
Dispositif de balayage avec des rayons lumineux

(30) Priority: 13.05.1987 JP 114705/87
(43) Date of publication of application: 17.11.1988
(73) Proprietor: Dainippon Screen Mfg. Co., Ltd., Kamikyo-ku Kyoto 602 (JP)
(72) Inventor: Sasada, Shigeru Dainippon Screen Mfg. Co., Ltd., Horikawa-Dori Kamikyo-ku Kyoto (JP); Kishida, Yoshihiro Dainippon Screen Mfg. Co., Ltd., Horikawa-Dori Kamikyo-ku Kyoto (JP)
(74) Representative: Goddar, Heinz J., Dr.

(56) References cited:
- EP-A- 0 052 524
- EP-A- 0 054 170
- EP-A- 0 127 856
- GB-A- 2 009 558
- US-A- 4 256 364

## Description

An apparatus for line-scanning a plurality of light beams on a surface. Such an apparatus, having the features as outlined in the preamble of claim 1, is known, for instance, from GB-A-2 009 558.

A conventional light beam deflection scanning method and apparatus is disclosed, for example in U.S. Pat. 4,080,634. Generally, a galvanometer mirror, a rotating monogon and polygon mirrors, etc. are employed as the aforementioned deflector member for producing the deflecting scanning in the art. Furthermore, in the conventional apparatus, there are ordinarily disposed a fϑ lens, ftanϑ lens, sin⁻¹ϑ lens or the like as the scanning lens between the deflector member and the surface being scanned.

However, these fϑ lens, ftanϑ lens, and the sin⁻¹ϑ lens are subject to a fault of bending or distortion of the scanning line tracks made by the light beam on the surface being scanned when the light beam impinges upon the lenses at an angle of some degrees with planes that are parallel with the optical axis thereof, although such is not the case when the beam goes in parallel with the optical axis. Accordingly, although it is possible to design the beam to impinge upon the scanning lens exactly on such condition, extremely high degree of adjustment accuracy is required for that purpose, thus leading to low productivity of the scanning optics.

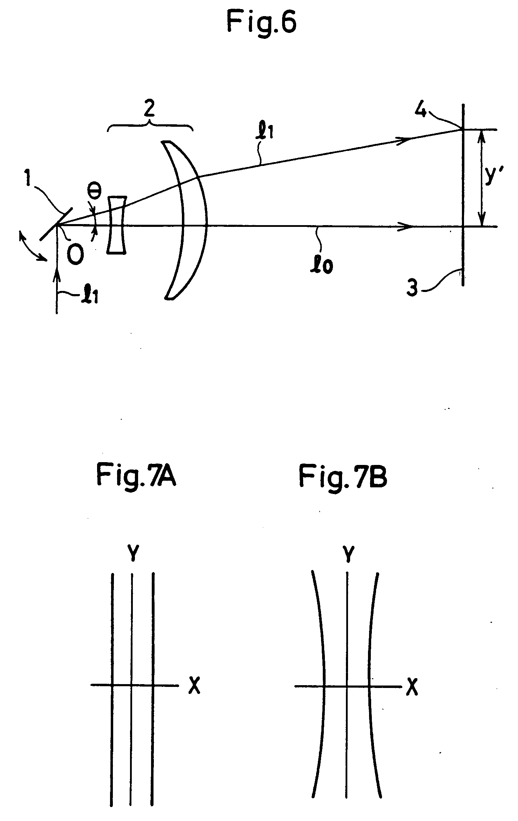

Fig. 7A, in which reference mark Y denotes a main scanning direction and X a subscanning direcion, illustrates the straight scanning line tracks drawn on the surface being scanned by the light beams that all impinge upon the scanning lens accurately in parallel with its optical axis. Meanwhile Fig. 7B depicts the case where two beams among three ones do at angles of some degrees with the axis except the middle one so as to make tracks having ends outwardly bent or distorted on the theory or principle described below, which means the resultant reproduction images with uneven density adversely.

### SUMMARY OF THE INVENTION

In any case of scanning a surface with a plurality of light beams by passing the light beams through a scanning lens, the plural light beams other than one light beam must be incident in the scanning lens at incident angles of some degrees with a plane parallel with the optical axis thereof. In a conventional scanning apparatus, then, bending or distortion of scanning lines is always made with respect to the plural light beams.

The main object of the present invention is to provide a light beam scanning apparatus which can linearly scan a surface with a plurality of light beams.

According to the present invention, the linear scanning lines are obtained of the surface by correcting the positions of the light beams in the subscanning direction with the oscillator means, the acousto-optical modulator and the correction means disclosed in the characterizing part of claim 1.

Gist of the present invention is as follows:

The correction data are provided to the oscillator means from the correction means to correct (or vary) the frequencies of the ultrasonic wave signals. In response to the correction of the frequencies, the acousto-optical modulator then varies the deflection angles, so that the exit angles of the light beams are corrected. As a result, the incident angles of the light beams in to the scanning lens are also corrected.
Now, the correction of the frequencies depends on the characteristics of the scanning lens, the incident angles of the respective light beams and the position of the light spots in the main scanning direction. The position of each light beam, which has its own incident angle, in the subscanning direction is corrected at each main scanning position by correcting its incident angle on the basis of the characteristics of the scanning lens.

Then, the scanning apparatus according to the present invention can precisely realize a plurality of linear scanning lines on the surface.

Hence, since even the light beam that fails to impinge upon the scanning lens in parallel with the optical axis thereof is capable of drawing on the surface being scanned the straight scanning line tracks free of any bending or distortion whatsoever according to the invention, there can be achieved reproduction of the original image with even density.

### BRIEF DESCRIPTION OF THE DRAWINGS

The foregoing and other objectives and attendant advantages of the present invention will be readily appreciated as the same becomes better understood by reference to the following detailed description when considered by accompanying drawings, wherein:
Fig. 1A is a schematic view depicting a multiple light beams deflection scanning system according to a first embodiment of the invention;
Fig.1B is an enlarged view showing a grating sensor 25 of Fig.1A;
Fig. 2 is a block diagram schematically depicting the deflection control of the light beams;
Fig. 3 is a schematic view illustrating the light beam deflection scanning system according to a second embodiment of the invention;
Figs. 4A through 4C are views depicting the scanning line tracks made by the system of Fig. 3;
Fig. 5 is a block diagram schematically showing the deflection control of the light beam;
Fig. 6 is a schematic view illustrating the light beam scanning system utilizing the galvanometer mirror;
Figs. 7A and 7B are typical views depicting scanning line tracks made on the surface being scanned by the multiple light beams; and
Fig. 8 is a perspective view illustrating optical paths of the scanning optical system.

### DETAILED DESCRIPTION OF THE PREFERRED EMBODIMENTS

Described hereunder is a theory or principle explaining the phenomenon that the bent or distorted scanning line tracks are made on the surface being scanned based on the characteristics of the scanning lens being utilized when the light beam impinges upon the lens at an angle of some degrees with the planes that are parallel with the optical axis of the lens.

Fig. 6. is a schematic view illustrating the light beam sweeping system by utilizing a galvanometer mirror 1 as the deflector member.

A light beam l₁, after emitted from a light source not shown, impinges upon the mirror 1 rotating on an axis perpendicular to the plane of the drawing, and then is reflected by the mirror 1 at point O, so that it is focused onto a surface being scanned 3 through a scanning lens 2. Thus, the beam is swept on the surface 3 as the mirror 1 is rotated.

When the fϑ lens, which is most commonly employed in the art, is applied as the scanning lens 2, it exhibits the characteristic as specified by the following equation:$\text{y′ = fϑ}$
where f represents the focal length of the lens 2; an angle made by the beam l₁ deflected at deflection point O with optical axis l₀ of the lens 2; and y′ a distance between falling point 4 of the beam l₁ on the surface 3 and the optical axis l₀ along the the surface 3.

The light beams that fail to impinge upon the scanning lens in parallel with the optical axis thereof are unable to draw straight scanning line tracks on the surface 3 as demonstrated below.

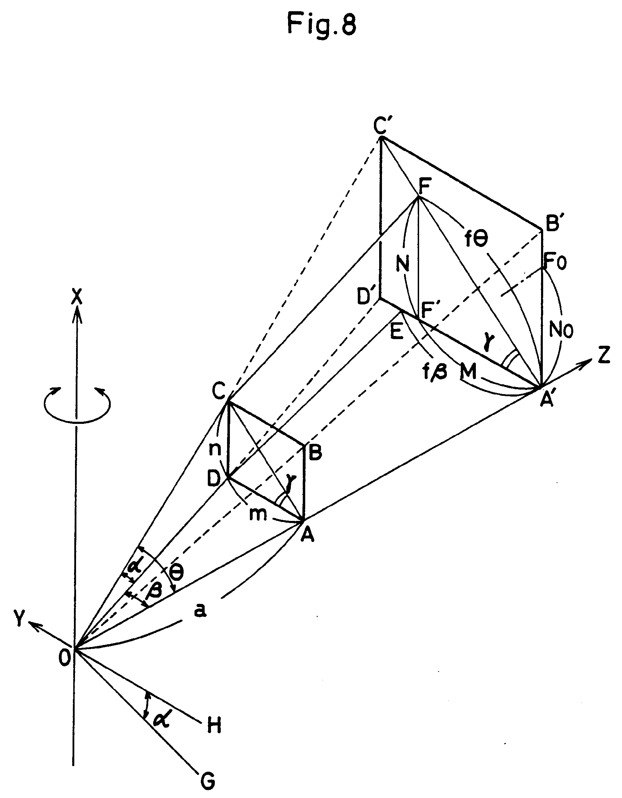

Fig. 8 is a schematic perspective view depicting optical paths of the light beam sweeping system, by means of X-Y-Z rectangular coordinate system.

The galvanometer mirror not shown is rotated on X-axis, and the scanning lens is disposed such that its optical axis coincides with Z-axis. A quadrangle "ABCD" represents part of the principal plane of the lens, while another quadrangle "A′B′C′D′" does part of the surface being scanned. The two quadrangles are perpendicular to the optical axis, i.e. Z-axis, respectively and also analogous to each other.

The main scanning direction of the scanning system is equal to Y-axis direction, and points O, A, A′, D, D′, E, F′ and H are all on the Y-Z plane.

A first light beam defined by the points "HODE" impinges upon the galvanometer mirror, and is reflected at the point O on the mirror and deflected in Y-Z plane, and finally falls on the point E on the surface being scanned. A second beam represented by the points "GOCF" upwardly impinges upon the mirror at an angle of α radian with the Y-Z plane, and is reflected at the point O and falls on the point F on the surface being scanned. Point F′ is an end of a normal vertically extending from the point F to line A′D′.

Then, the following equations are established:$\text{tanα =} \frac{\text{n cosβ}}{\text{a}}$$\text{tanβ =} \frac{\text{m}}{\text{a}}$$\text{tanϑ =} \frac{\sqrt{\text{m² + n²}}}{\text{a}}$$\text{tanγ =} \frac{\text{n}}{\text{m}}$
where β is an angle made by the first light beam with the optical axis; ϑ an angle by the second light beam with the optical axis; γ an angle made by diagonals of the quadrangles "ABCD" and "A′B′C′D′" with the Y-Z plane; m a distance between the points A and D; n a distance between the points C and D; M a distance between the points A′ and F′; N a distance between the points F and F′; and a a distance between the points O and A.

When the fϑ lens is applied as the scanning lens, the following equations are established based on its characteristic as aforesaid:$\text{M = fϑ cosγ}$$\text{N = fϑ sinγ}$

Substituting for n and m in Eqs.(1) and (2) from Eqs.(3) and (4)$\text{tanϑ =} \sqrt{\frac{\text{tan²α}}{\text{cos²β}}} \text{+ tan²β}$$\text{tanγ =} \frac{\text{tanα}}{\text{sinβ}}$

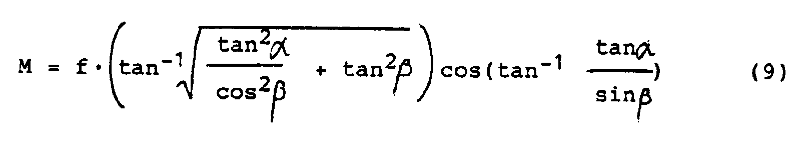

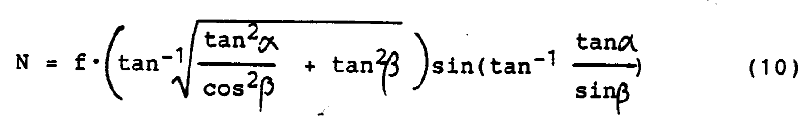

The following tables illustrate the calculation results when values are actually applied in the above eqations:

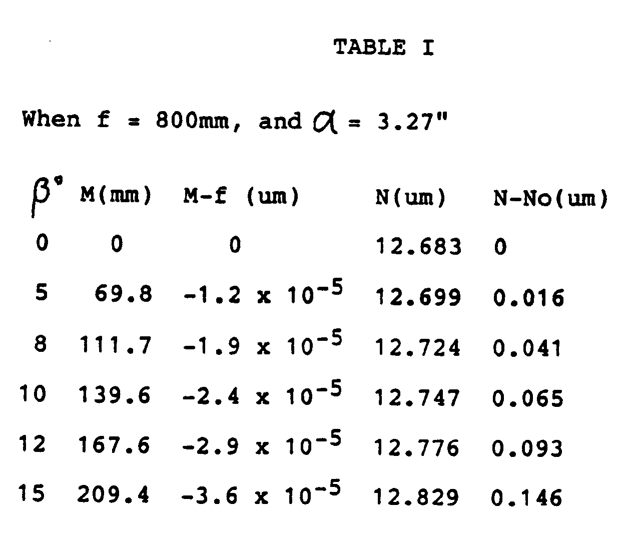

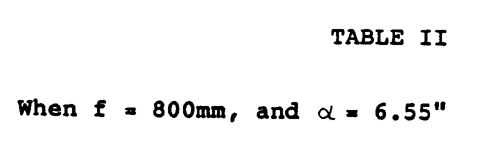

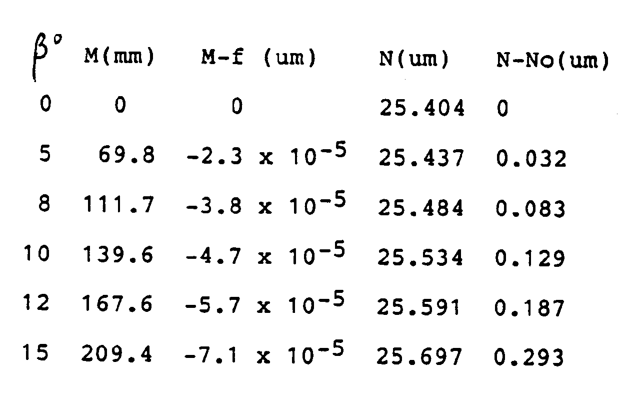

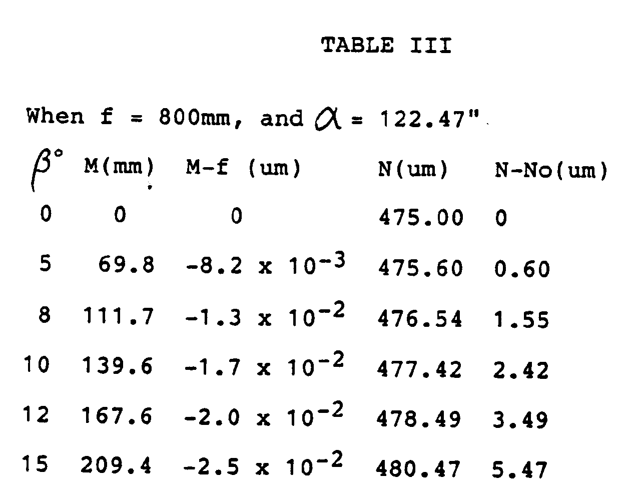

where No is a value of N when β = 0 in all the above tables.

As explicit from the above tables, it is appreciated that the light beams, which impinge upon the scanning lens at angles of some degrees with the planes parallel with the optical axis thereof, fail to draw the straight scanning line tracks when the generally accepted fϑ lens is employed as the scanning lens. This will hold true when the number of the impinging light beams is small and nevertheless each light beam is so large in radius that the angle α defined as above is considerably large and hence the value N - No is rather large, not to mention the case where the number of the beams is large.

When the same study is made on the applications of the ftanϑ and sin⁻¹ϑ lenses, it is demonstrated that the bending or distortion of the scanning line tracks also takes place. For example, when the ftanϑ lens is applied as the scanning lens 2 in the light beam sweeping system shown in Fig. 6, it exhibits the characteristic expressed below:$\text{y′ =ftanϑ}$

Further, the following equations are established accordingly:$\text{M = ftanϑcosγ}$$\text{N = ftanϑsinγ = f} \frac{\text{tanα}}{\text{cosβ}}$$\text{N - No = f(} \frac{\text{tanα}}{\text{cosβ}} \text{- tanαo)}$

Where No is a value of N when β = 0, and αo a value of α when β = 0.

The following table illustrates the calculation results found based on the above eqations.

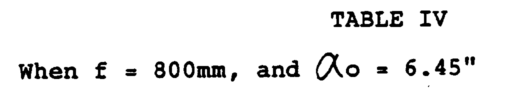

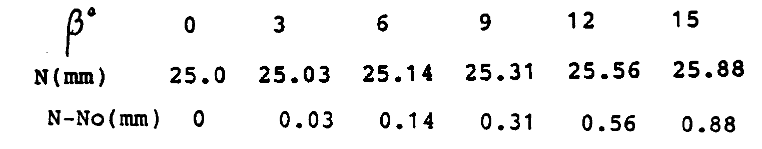

Now referring to the drawings, there are described preferred embodiments of the invention below.

### FIRST EMBODIMENT

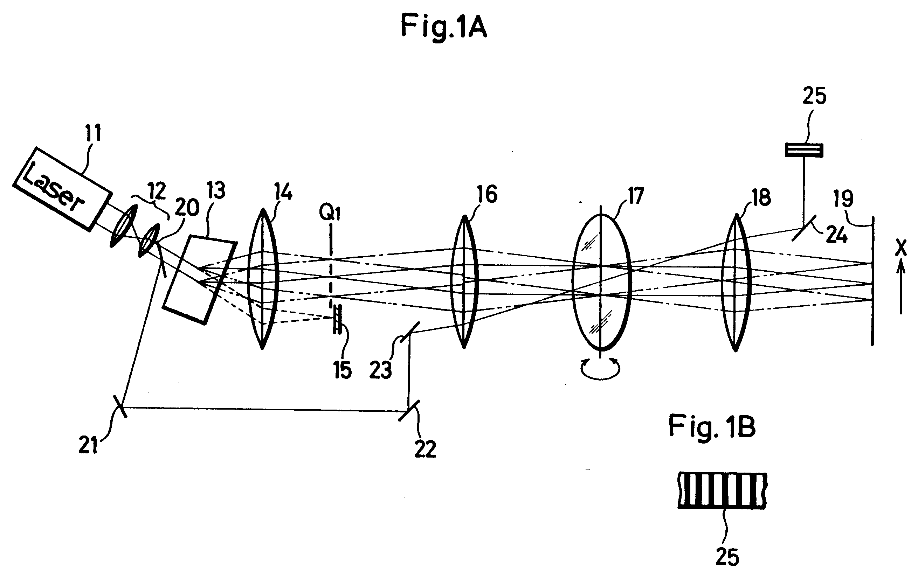

Fig. 1A is a schematic view depicting a multiple light beams deflection exposing scanning system for recording a reproduced image on a photosensitive material according to a first embodiment of the invention, which system is provided with a multiple-light beams producing unit which utilizes acoustooptical modulator(hereinafter referred as AOM merely) that is actuated by ultrasonic wave signals having plural types of frequencies.

A light beam is emitted by a laser beam source 11, and reduced in radius by a beam condenser 12, and thereafter impinges upon the AOM 13, to which are applied ultrasonic waves synchronized of plural types (three types in this embodiment) respectively having distinct frequencies, so that the beam is deflected and caused to travel along three divided optical paths by the AOM in a manner to be mentioned below.

The lens 14 is disposed at a distance equal to its focal length from the center of the AOM 13, and the light beams in the paths are focussed at back focuses Q₁ of the lens 14. In Fig. 1, the optical paths thus formed are distinguishably denoted in solid lines, chain dot lines, and phantom.

A zero-order light beam, as depicted in broken lines in Fig. 1, is shielded by a suitable shutter member 15, whereas the three first-order light beams proceed to impinge upon a collimator lens 16 from the positions Q₁ and are converged upon a galvanometer mirror 17, which is rotated upon an axis extending parallel with the plane of the drawing in order to periodically deflect the beams in a direction perpendicular to the plane of the drawing. Thereafter, the light beams impinge upon a scanning lens 18 so that light spots in number equal to the number of the beams are focussed on a surface being scanned 19 of a photosensitive material which is moved in a subscanning direction denoted in an arrow X in Fig. 1A by a moving member not shown. Thus, the beams are capable of scanning to expose the surface 19 in the direction vertical to the plane of the drawing as the galvanometer mirror 17 is rotated.

Furthermore, a half mirror 20 is provided at a stage preceding to the AOM 13 for branching off a subsidiary light beam for use with the production of timing pulses. The subsidiary light beam is caused to impinge upon the galvanometer mirror 17, passing an optical path different from that of the exposing light beam via mirrors 21, 22, and 23. The subsidiary beam is then reflected by a mirror 24 toward a grating sensor 25 located at a suitable postition, thereby yielding timing pulse signals synchronously with the advancing of the main scanning beams.

The grating sensor 25 is formed of a grating and a photoelectric detector equipped therebehind. The grating is assembled of numerous light transmitting and excluding parts alternately disposed at a specified pitch, as shown in Fig. 1B. As the subsidiary light beam runs on the grating sensor 25 in a lengthwise direction synchronously with the main scanning of the exposing light beams, the photoelectric detector outputs the pulse signal for every light transmitting part.

Described and demonstrated as above, there arises a problem that the bent or distorted scanning line tracks are formed by the light beams that impinge upon the scanning lens 18 at angles of some degrees with the optical axis of the lens when the fϑ lens, ftanϑ lens, sin⁻¹ϑ lens, or the like is applied as the scanning lens 18. Accordingly, the system illustrated in Fig. 1A is designed to eliminate such problem by controlling the amount of the deflection for each exposing light beam in the AOM 13, depending upon the falling position of the beam on the surface being scanned 19.

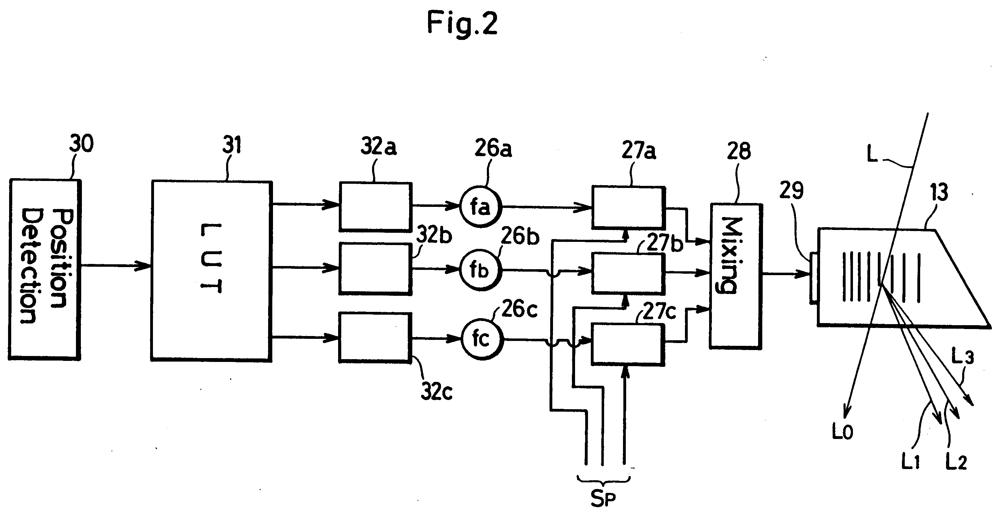

Fig. 2 is a block diagram schematically explaining the mode or manner in which the single light beam emitted from the laser source 11 is caused to travel along divided optical paths by applying plural types of frequencies to the AOM and at the same time a deflection angle of each of multiple light beams is controlled depending on the main scanning positions of the focussed light spots of the beams on the surface being scanned 19.

A plurality of (three in this embodiment) oscillators 26a, 26b, and 26c are provided for yielding ultrasonic wave signals fa, fb, and fc each having distinct frequency. The signals fa, fb, and fc are transmitted to corresponding modulation circuits 27a, 27b, and 27c, respectively, and undergo on-off contol and amplitude modulation based on image signals Sp that are applied to the circuits 27a, 27b, and 27c, and then inputted in parallel to a mixer circuit 28. The circuit 28 synthesizes these signals fa, fb, and fc into a high frequency signal having plural types of frequency components, and applies the signal to a transducer 29 of the AOM 13. Thus, in the AOM there are formed compressed standing waves having pitches corresponding to the frequency components of the ultrasonic wave signal.

When the light beam L is given by the laser beam source 11 to the AOM 13 so having the compressed standing waves produced therein, the beam L is split into 0-order light beam Lo not diffracted and three first-order light beams L₁, L₂, and L₃ diffracted at angles of degrees corresponding to the respective component frequencies. The above separation of the light beam into plural ones by the application of plural types of ultrasonic wave signals to the single AOM is conducted in the manner conventionally known to the art.

At stages preceding to the oscillators 26a through 26c, there are provided arrangements for altering and adjusting the frequencies yielded thereby. Specifically, there are provided a light beam position detection circuit 30, a look-up table 31(hereinafter referred to as "LUT"), and frequency control circuits 32a through 32c respectively corresponding the oscillators 26a through 26c. The light beam position detection circuit 30 is designed to detect the falling positions of the individual light beams on the surface being scanned 19 on the basis of timing pulses having a suitable pitch that are made by the multiplication of, or the frequency division of, the pulse signals yielded by the grating sensor 25, and to input data concerning such positions to the LUT 31.

In the LUT 31, there are stored modulation data regarding the frequencies to be applied to the AOM 13, which data are for use in correcting the amount of deviation(expressed as N-No as aforementioned) of each light beam that does not impinge upon the scanning lens in parallel with the optical axis of the lens, in dependence on the falling position of the beam upon the surface being scanned 19. Such data are beforehand found for the angles of degrees (expressed as in the foregoing)to be made by the impinging light beams upon the scanning lens with the planes that are parallel with the optical axis of the lens. These angles of the respective light beams impinging on the scanning lens with the planes parallel with the optical axis of the scanning lens can be calculated based on the deflection angles of the beams determined in the AOM 13. Consequently, the LUT 31 outputs scanning line distortion correction data concerning exposing light beams to the frequency control circuits 32a through 32c upon receiving the above position data from the detection circuit 30.

Based on the correction data, the control circuits 32a through 32c modulate the frequencies produced by the corresponding oscillators 26a through 26c in order to adjust the deflection angles of the exposing light beams to be determined by the AOM 13 such that the subject straight scanning line tracks are duly formed by the beams on the surface being scanned 19.

The intervals among the three light beams at the back focuses Q₁ of the lens 14 depend upon the deflection angles of the beams by the AOM 13 in Fig. 1. Further, these deflection angles are governed by the frequencies of the ultrasonic wave signals to be given to the AOM 13. Accordingly, the suitable selection of the fundamental frequencies of the oscillators 26a through 26c makes it possible to set as desired values of the pitches of the beams at the back focuses Q₁ and and hence to determine at will those of the pitches of the scanning lines on the surface being scanned 19 which are governed by the values of the pitches of the beams at the back focuses Q₁ and the diameters of the beam spots thereof on the surface 19. Furthermore, the proper modulation of the frequencies produced by the oscillators 26a through 26c in dependence on the falling positions of the beams on the surface being scanned enables the bent or distorted scanning line tracks drawn by the beams to be corrected and thus the whole scanning lines to be made parallel straight ones.

The following table illustrates an example of deflection angle adjustment data for cancelling the deviation amount expressed as N-No in the foregoing to correct the scanning line tracks made by that light beam into the straight ones which impinges upon the ftanϑ lens at an angle of αo = 6.45˝ on condition that f = 800mm:

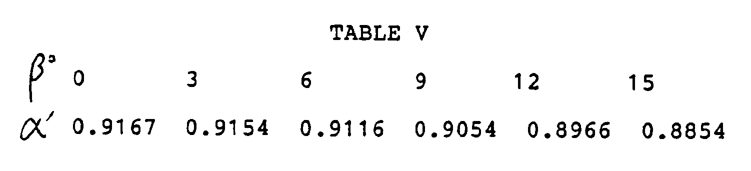

where α′= tan ⁻¹(1.6 × 10⁻²cosβ).

Moreover, the following table shows an example of data concerning the frequencies of the ultrasonic wave signal to be applied to the AOM which assures the properly adjusted deflection angle of the beam that impinges upon the ftanϑ lens at an angle of αo= 6.45˝ on condition that f = 800mm:

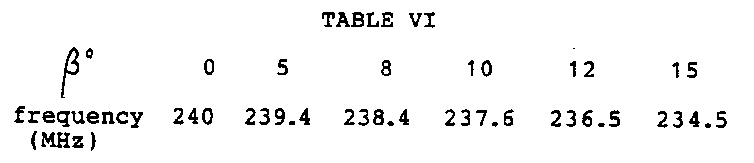

Needless to say, the number of the exposing light beams is not limited to that described in this embodiment, and can be freely chosen.

### EMBODIMENT II

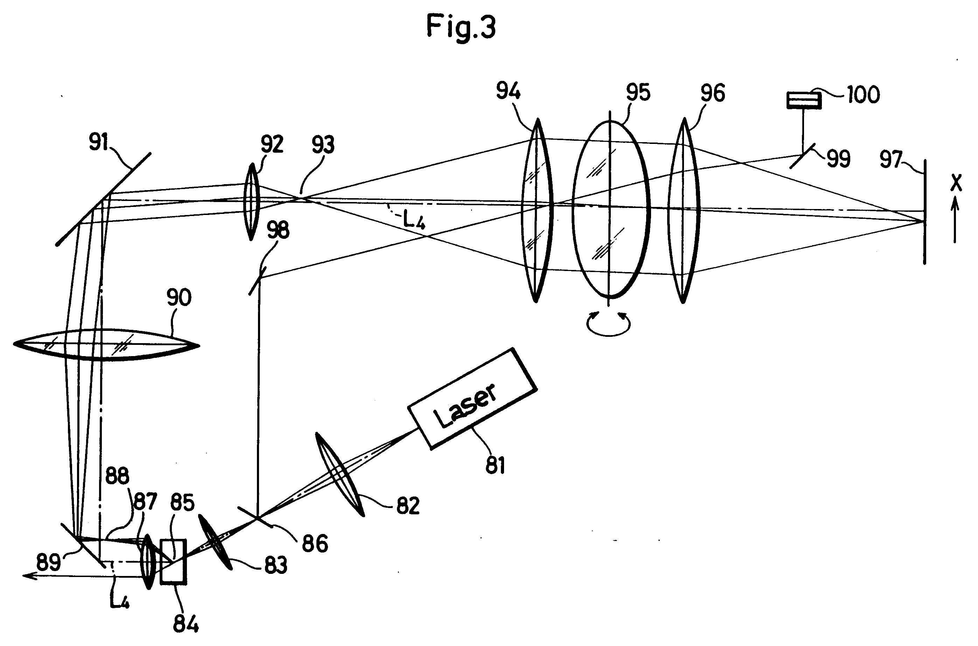

Although in the first embodiment a plurality of parallel light beams are arranged to simultaneously impinge upon the deflector member such as the galvanometer mirror, the present invention is not always reduced thereto. For example, it is also possible to apply the present invention to the so called wobble scanning wherein a light spot of a single scanning light beam moves on the surface being scanned in a subscanning direction in a higher cycle than a cycle in which it does in a main scanning direction for the purpose of covering a plurality of scanning lines in one main scanning period, and Fig. 3 schematically illustrates a second embodiment in which such concept is reduced to practice.

A light beam is emitted by a laser beam source 81 to an AOM 84 through lenses 82 and 83, and a first image 85 thereof is focussed within the AOM 84. Between the lenses 82 and 83, there is disposed a half mirror 86 for branching a subsidiary beam off the main beam for timing control.

The main light beam is deflected in the AOM 84 at an angle of degrees in accordance with the frequency of the ultrasonic wave signal applied to the AOM 84, and made parallel with the optical axis L₄ of a lens 87 that is positioned at a distance equal to its focal length from a deflection point so as to focus a second image 88 after the beam passes through the lens 87. The beam is then reflected by a mirror 89 and transformed into a parallel luminous flux by a lens 90. Thereafter, the beam is reflected by a mirror 91 and a third image thereof 93 is focussed by a lens 92.

The light beam travelling from the point at which the third image 93 is focussed is again formed into a parallel luminous flux by a collimator lens 94, and impinges upon a galvanometer mirror 95. Like the case of the first embodiment, the galvanometer mirror 95 is rotated about an axis extending parallel with the plane of the drawing in order to periodically deflect the impinging beam in a direction normal to the plane of the drawing. A light spot of the defleted light beam is focussed by a scanning lens 96 on a surface 97 of a photosensitive material to be exposed which is moved in the subscanning direction X by a moving member not illustrated, and thus the light spot runs on the surface 97 as the galvanometer mirror 95 is rotated.

The branched subsidiary light beam is reflected by a mirror 98 and impinges upon the galvanometer mirror 95 through the collimator lens 94 together with the exposing main light beam. The subsidiary beam is then deflected by the mirror 95 synchronously with the deflection of the exposing beam so as to scan a grating sensor 100 via the scanning lens 96 and a mirror 99, thus yielding timing pulses as in the first embodiment.

From Fig. 3, it is appreciated that the exposing light beam of parallel luminous flux impinges upon the galvanometer mirror 95 at a slant angle of slight degrees with the optical axis L₄ denoted in chain dot lines, and that the amount of degrees of the slant angle depends on the distance of the light beam incident on the lens 90 from the optical axis L₄ and further that the incident point of the beam on the lens 90 is governed by the deflection angle thereof determined by the AOM 84.

Since the distance of the falling position of the light beam on the surface being scanned 97 from the optical axis L₄ along the surface 97 is varied by the degrees of the slant agnle at which the light beam impinges upon the scanning lens 96 with the optical axis L₄ thereof, it is possible to control the focussed point of the light beam on the surface 97 with respect to a direction intersecting the main scanning direction at a right angle( in a direction along the plane of the drawing) by appropriately controlling the deflection angle of the beam in the AOM 84.

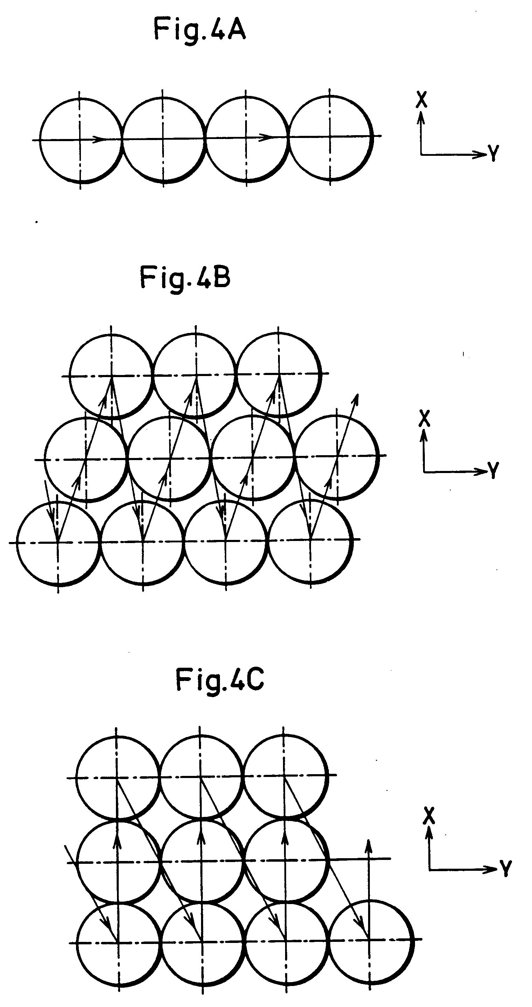

According to the general light beam deflection scanning by a single beam, the light beam scans the surface to be scanned along only one scanning line in the main scanning direction, as depicted in Fig. 4A. However, according to the wobble scanning conventionally known to the art, alteration of a deflection angle control signal to be supplied with the AOM 84 in Fig. 3 to a necessary extent permits the light beam to be reciprocally deflected in the subscanning direction in a higher cycle than that in which the galvanometer mirror 95 is rotated, whereby it is possible for the beam to cover plural main scanning lines in one reciprocating rotation period of the galvanometer mirror 95, as illustrated in Fig. 4B. Furthermore, to attain the similar end, there is provided another AOM in addition to the AOM 84, and the exposing light beam draws scanning line tracks shown in Fig. 4C when the AOM 84 is inclined at an angle of required degrees and the additional AOM is disposed at an angle perpendicular to the deflection angle of the light beam specified by the AOM 84. At the same time, correction of the plural scanning lines distortions is enabled by adding to the deflection angle control signal that is supplied with the AOM 84 the amount of deflection for correcting and cancelling the amount of distortion of the scanning line tracks caused by the characteristic of the scanning lens.

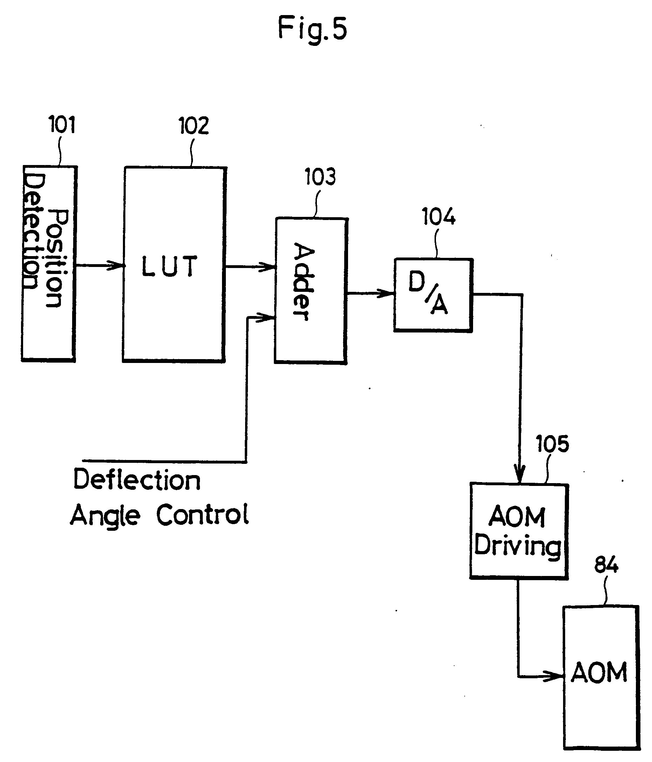

Fig. 5 is a block diagram depicting an embodiment of a system for performing the correction of the distortions of the scanning line tracks on the surface being scanned drawn by the exposing light beams, which system is applied for the arrangemnet shown in Fig. 3.

A light beam position detection circuit 101 detects the falling position of the focussed light beam on the surface being scanned 97 based on pulse signals produced by a grating sensor 100, and then delivers data concerning such position to an LUT 102, in the same manner as in the first embodiment.

Like the case of the first embodiment, there are stored in the LUT 102 data for use in adjusting the deflection angle of the light beam in the AOM 84 in order to correct that falling position of the beam on the surface 97 which is peculiar to the characteristic of the scanning lens being employed. Upon receiving the position data delivered from the detection circuit 101, the LUT 102 outputs distortion correction data respectively corresponding to the falling positions of the beam and to degrees of the angles at which the beam impinges upon the scanning lens with the planes that are parallel with the optical axis of the lens.

The distortion correction data are transmitted to an adder 103 at a stage subsequent to the LUT 102 that adds thereto light beam deflection angle control signals to be supplied with the AOM 84. The deflection angle control signals including the proper distortion correction data components are then converted into analog signals by a digital-to-analog converter 104, and applied to the AOM 84 through an AOM driving circuit 105.

Thus, the single light beam which has undergone the modulation by the AOM 84 so given such control signal is capable of drawing on the surface being scanned the scanning line tracks all of which are free of any bending or distortion whatsoever, in the case of coverage of plural main scannig lines as illustrated in Fig. 4A and 4B.

Unlike the case of the first embodiment, this embodiment can be applied in scanning the image to be reproduced and obtaining image signals thereof as well as in exposing the reproduced image on the photosensitive material. Specifically, since the single light beam is moved at a high speed in the subscanning direction so as to scan a plurality of main scanning lines in one main scanning period and further the number of the scanning light spot is just one, it is possible for the beam to pick up an image information of only one pixel at a time in scanning an original image, which permits of the application of original image input scanning. In that case, the original image is placed at a position of the surface 97 of the photosensitive material and light reflected by or penetrating the original image is caused to fall on a photoelectric detector in order to obtain the image signals thereof, when the system shown in Fig. 3 is applied in the original image input scanning.

Although the galvanometer mirror is utilized for the deflector member in the foregoing embodiments, it is possible to use therefor any other type of deflector member such as a polygon or monogon mirror.

While the preferred embodiments of the present invention have been described above, it should be understood that various modification may be made herein without departing the scope of the appended claims.

The features disclosed in the foregoing description, in the claim and/or in the accompanying drawings may, both separately and in any combination thereof, be material for realising the invention in diverse forms thereof.

## Claims

1. An apparatus for line-scanning a plurality of light beams on a surface (19), comprising:
light source (11) for emitting a light beam;
divider means (13) for optically dividing the light beam into a plurality of light beams arranged in a subscanning direction;
deflection means (17) for deflecting the light beams in a main scanning direction perpendicular to the subscanning direction;
a scanning lens (18) for focusing the deflected light beams on the surface (19) to form a plurality of light spots thereon,
beam position detection means (25,30) for generating a position signal representing the position of the light spots in the main scanning direction;
correction means (31) for correcting the positions of the light spots in the subscanning direction according to the position signal;
characterized in that the divider means comprises:
oscillator means (26a, 26b, 26c) for generating a plurality of ultrasonic wave signals having respective frequencies different from each other; and
an acousto-optical modulator (13), for deflecting the light beam emitted from the light source (11) in response to the ultrasonic wave signals to emit the light beams at their respective exit angles corresponding to the frequencies thereof, whereby incident angles of the light beams onto the scanning lens (18) are different from each other; and
that the correction means (31) generates correction data for correcting the frequencies of the ultrasonic wave signals in response to the position signal, wherein the correction of the frequencies depends on the characteristics of the scanning lens (18, 96), the incident angles of the respective light beams thereon and the position of the light spots in the main scanning direction.

2. An apparatus as recited in claim 1, wherein the oscillator means (26) designed to correct the frequencies of the ultrasonic wave signals on the basis of the correction data supplied from the correction means.

3. An apparatus as recited in claim 2, wherein the correction means comprises a look-up table unit (31) for storing the correction data, wherein the correction data are generated corresponding to the position signal.

4. An apparatus as recited in claim 3, wherein the beam position detecting means comprises a grating unit (25) having a plurality of transparent parts and shading parts alternately disposed in the main scanning direction at a predetermined pitch; and
a photoelectric detector (30), disposed optically behind the grating unit (25, 100) for generating pulse signals forming the basis of the position signal.

## Patentansprüche

1. Vorrichtung zum Zeilenabtasten einer Mehrzahl von Lichtstrahlen auf einer Fläche (19), mit:
einer Lichtquelle (11) zum Aussenden eines Lichtstrahls;
Teilermitteln (13) zum optischen Aufteilen des Lichtstrahls in eine Mehrzahl von Lichtstrahlen, die in einer Nebenabtastrichtung angeordnet sind;
Ablenkmitteln (17) zum Ablenken der Lichtstrahlen in der Hauptabtastrichtung senkrecht zu der Nebenabtastrichtung;
einer Abtastlinse (18) zum Fokussieren der abgelenkten Lichtstrahlen auf die Fläche (19) zum Bilden einer Mehrzahl von Lichtpunkten auf dieser;
Strahlpositionserkennungsmitteln (25, 30) zum Erzeugen eines Positionssignals, das die Position eines Lichtpunktes in der Hauptabtastrichtung darstellt;
Korrekturmitteln (31) zum Korrigieren der Positionen der Lichtpunkte in der Nebenabtastrichtung entsprechend dem Positionssignal;
dadurch gekennzeichnet, daß das Teilermittel aufweist:
Oszillatormittel (26a, 26b, 26c) zum Erzeugen einer Mehrzahl von Ultraschall-Wellensignalen mit jeweiligen Frequenzen, die sich voneinander unterscheiden; und
einen akusto-optischen Modulator (13) zum Ablenken des von der Lichtquelle (11) ausgesandten Lichtstrahls in Antwort auf die Ultraschall-Wellensignale, um die Lichtstrahlen mit jeweiligen Ausgangswinkeln, die den zugehörigen Frequenzen entsprechen, auszusenden, wodurch die Auftreffwinkel der Lichtstrahlen auf die Abtastlinse (18) voneinander unterschiedliche sind;
und dadurch, daß das Korrekturmittel (31) Korrekturdaten zum Korrigieren der Frequenzen der Ultraschall-Wellensignale in Antwort auf das Positionssignal erzeugt, wobei die Korrektur der Frequenzen von der Charakteristik der Abtastlinse (18, 96), den Auftreffwinkeln der jeweiligen Lichtstrahlen auf diese und der Position der Lichtpunkte in der Hauptabtastrichtung abhängt.

2. Eine Vorrichtung nach Anspruch 1, wobei das Oszillatormittel (26) dazu ausgebildet ist, die Frequenzen der Ultraschall-Wellensignale auf der Grundlage der Korrekturdaten, die von dem Korrekturmittel zugeführt worden sind, zu korrigieren.

3. Eine Vorrichtung nach Anspruch 2, wobei das Korrekturmittel eine Nachschlagtabellen-Einheit (31) aufweist, um die Korrekturdaten zu speichern, wobei die Korrekturdaten entsprechend dem Positionssignal erzeugt werden.

4. Eine Vorrichtung nach Anspruch 3, wobei die Strahlpositionerkennungsmittel eine Gittereinheit (25) mit einer Mehrzahl von transparenten Abschnitten und abdeckenden Abschnitten aufweist, die in der Hauptabtastrichtung mit einem vorgegebenen Abstand alternierend angeordnet sind; und
mit einem fotoelektrischen Detektor (30), der optisch hinter der Gittereinheit (25, 100) angeordnet ist, um Impulssignale zu erzeugen, die die Grundlage für die Positionssignale bilden.

## Revendications

1. Dispositif pour le balayage de lignes d'une pluralité de rayons lumineux sur une surface (19), comprenant :
une source lumineuse (11) pour émettre un rayon lumineux;
un moyen diviseur (13) pour diviser optiquement le rayon lumineux en une pluralité de rayons lumineux placés dans une direction de sous-balayage secondaire;
un moyen de déflection (17) pour défléchir les rayons lumineux dans une direction principale de balayage perpendiculaire à la direction de sous-balayage secondaire;
une lentille de balayage (18) pour focaliser les rayons lumineux défléchis sur la surface (19) afin de former une pluralité de points lumineux sur celle-ci;
un moyen de détection de position de rayon (25, 30) pour produire un signal de position représentant la position des points lumineux dans la direction principale de balayage;
un moyen de correction (31) pour corriger les positions des points lumineux dans la direction de balayage secondaire selon le signal de position;
caractérisé en ce que le moyen diviseur comprend :
des moyens oscillateurs (26a, 26b, 26c) pour produire une pluralité de signaux d'ondes ultrasoniques ayant des fréquences correspondantes différentes les unes des autres; et
un modulateur acousto-optique (13), pour défléchir le rayon émis par la source lumineuse (11) en réponse aux signaux d'ondes ultrasoniques pour émettre les rayons lumineux, dont les angles de sortie correspondent aux fréquences de ceux-ci, ce par quoi les angles d'incidence des rayons lumineux vers la lentille de balayage (18) sont différents les uns des autres; et
ce par quoi le moyen de correction (31) produit des données de correction pour corriger les fréquences des signaux d'ondes ultrasoniques en réponse au signal de position, dans lequel la correction des fréquences dépend des caractéristiques de la lentille de balayage (18, 96), des angles d'incidence des rayons lumineux correspondants et de la position des points lumineux dans la direction principale de balayage.

2. Dispositif selon la revendication 1, dans lequel le moyen oscillateur (26) est conçu pour corriger les fréquences des signaux d'ondes ultrasoniques sur la base des données de correction fournies par le moyen de correction.

3. Dispositif selon la revendication 2, dans lequel le moyen de correction comprend une unité de table à consulter (31) pour stocker les données de correction, dans laquelle les données de correction sont produites en correspondance avec le signal de position.

4. Dispositif selon la revendication 3, dans lequel le moyen de détection de position de rayon comprend une unité de diffraction (25) comportant une pluralité de parties transparentes et de parties sombres disposées alternativement avec un pas prédéterminé dans la direction principale de balayage; et
un détecteur photoélectrique (30) optiquement disposé après l'unité de diffraction (25, 110) pour produire des signaux d'impulsion constituant la base du signal de position.
